# EUROPÄISCHE PATENTSCHRIFT

(11) **EP 0 940 587 B1**
(45) Veröffentlichungstag und Bekanntmachung des Hinweises auf die Patenterteilung: **11.12.2002**
(21) Anmeldenummer: 99102434.0
(22) Anmeldetag: 09.02.1999
(51) Int. Cl.: F16B 12/20

(54) **Befestigungsvorrichtung**
Fastening device
Dispositif de fixation

(30) Priorität: 17.02.1998 DE 29802610 U; 07.05.1998 DE 29808235 U
(43) Veröffentlichungstag der Anmeldung: 08.09.1999
(73) Patentinhaber: Hettich-Heinze GmbH & Co. KG, 32139 Spenge (DE)
(72) Erfinder: Brinkmann, Manfred, 32609 Hüllhorst (DE)
(74) Vertreter: Stracke, Alexander, Dipl.-Ing.

(56) Entgegenhaltungen:
- DE-A- 3 331 496

## Beschreibung

Die Erfindung betrifft eine Befestigungsvorrichtung für zwei miteinander zu verbindende Möbelteile, die im wesentlichen aus einem mittels eines in ein erstes Möbelteil eingesetzten Spannelementes in seiner Längsrichtung verfahrbaren Spannbolzen und einem in das zweite Möbelteil eingreifenden Spreizeelement besteht, welches den Spannbolzen umhüllt, wobei der Spannbolzen Spannflächen und das Spreizelement entsprechende Gegenflächen aufweist.

Bei der in Frage kommenden Befestigungsvorrichtung (siehe z.B. DE-A-3331496) kann das Spannelement beispielsweise ein Spannexzenter oder eine Schraube sein. Das Spreizelement liegt im gegenüberliegenden Endbreich und kann beispielsweise ein Spreizdübel sein. Die Herstellung der Befestigungsvorrichtung erfolgt, indem der üblicherweise aus Metall bestehende Spannbolzen in ein Spritzgußwerkzeug eingelegt wird, woraufhin das Spreizelement um den Bolzen herumgespritzt wird. Das Umspritzen der Spannbolzen innerhalb des Werkzeuges ist sehr rationell, wodurch Montagekosten eingespart werden.

Im heutigen modernen Möbelbau ist es gelegentlich erforderlich, daß die Durchmesser des Spannbolzens und des Spreizelementes relativ klein sind, da in den Möbelwänden Reihen von vorgefertigten Bohrungen vorgesehen sind, die aus optischen Gründen klein sind, beispielsweise einen Durchmesser von 5 mm haben.

Bei einer bekannten Befestigungsvorrichtung ist der Spannbolzen mit mehreren axial hintereinander angeordneten Konen ausgestattet, die zur Spreizung des Spreizelementes benutzt werden, wenn der Spannbolzen gegenüber dem Spreizelement eine Relativbewegung ausführt. Im Grenzbereich zwischen den beiden Konen ist der Durchmesser des Spannbolzens äußerst gering und wird durch die kleinere Kreisfläche des Querschnittes des Konus definiert.

Um den Querschnitt aus Festigkeitsgründen zu vergrößern, ist der Spannbolzen in Bereich der gefährdeten Konen durch axial verlaufende Rippen verstärkt. Der Spannbolzen ist üblicherweise mit vier um einen Winkel von jeweils 90° versetzten Rippen versehen und demzufolge kreuzförmig ausgebildet.

Die äußeren Flächen der Rippen liegen fluchtend zur Außenfläche des Spannbolzens. Dieses Maß entspricht in etwa dem Kerndurchmesser des mit einem Außengewinde versehenen Spreizelementes. Anstelle des Außengewindes könnten auch ähnliche Windungen verwendet werden. Diese Gestaltung hat den Grund, daß die in den Innenecken zwischen den Rippen des Spannbolzens ausgebildeten Kunststoffwandungen des Spreizelementes durch die in den Gewinderillen des Spritzgießwerkzeuges ausgebildeten Kunststoffbrücken im unverspannten Ausgangszustand zusammengehalten werden.

Beim Zusammenbau eines Möbels sitzt das Spreizelement im unverspannten Zustand mit relativ geringer Reibung in der Bohrung des Möbelteiles. Es muß sichergestellt sein, daß beim Bewegen des Spannbolzens mittels des Spannelementes das Spreizelement in seiner Lage verbleibt und sich nicht bewegt. Dazu ist das Spreizelement mit einem umlaufenden Anschlag ausgestattet, der jedoch äußerst dünn sein muß, da sich sonst ein zu großer Spalt zwischen den beiden zu verbindenden Möbelteilen ergibt. Es ist bislang nicht auszuschließen, daß der Anschlag deformiert wird, wenn sich das Spreizelement axial verschiebt. Diese Verschiebung kann sich ergeben, wenn zum Abreißen der vierreihig ausgebildeten Kunststoffbrücken eine zu große Kraft erforderlich wird. Das Spreizelement kann sich dann auch verschieben, so daß keine ausreichende Relativbewegung zwischen dem Spannbolzen und dem Spreizelement zum Ausspreizen desselben zur Verfügung steht.

Weiterhin besteht der Nachteil, daß der um die Konen zur Verfügung stehende Raum, der im Spritzgießwerkzeug mit Kunststoff ausgefüllt wird, geviertelt wird, d. h., daß die Segmente kleinvolumig ausgebildet sind, woraus sich spritztechnische Nachteile ergeben können.

Darüber hinaus ist noch nachteilig, daß sich bei einer Axialverschiebung die miteinander korrespondierenden Teile, nämlich der Innenkonus des Spreizteiles und der Außenkonus des Spannbolzens verändern, so daß von dem Spannelement zusätzlich noch Verformungsarbeit am Spreizteil aufgebracht werden muß, wodurch sich der Wirkungsgrad verschlechtert, da diese Arbeit bzw. die Kraft für den eigentlichen Spannvorgang nicht mehr zur Verfügung steht. Dies gilt insbesondere für relativ klein ausgebildete Spannelemente, die nur eine begrenzte Zugkraft entwickeln können.

Der Erfindung liegt die Aufgabe zugrunde, eine Befestigungsvorrichtung der eingangs näher beschriebenen Art so zu gestalten, daß sich das Spreizelement beim Anziehen des Spannbolzens nicht verschiebt, daß die notwendige Kraft zur Zerstörung der Brückenstege des Spreizelementes herabgesetzt wird und daß die aufgebrachte Kraft im wesentlichen vollständig in den Spannvorgang umgesetzt wird und daß darüber hinaus eine spritztechnisch günstige Form für das Spannelement erreicht wird.

Die gestellte Aufgabe wird gelöst, indem der Spannbolzen wenigstens eine einen Keil bildende, ebene Schrägfäche aufweist und daß das Spreizelement eine entsprechende an der Schrägfläche anliegende Gegenfläche aufweist.

Der in das Spritzgießwerkzeug eingelegte Spannbolzen wird im Bereich des Keiles oder der Keile mit dem Spreizelement umspritzt. Dadurch liegen die Innenflächen des Spreizelementes vollflächig an den Außenflächen des Spannelementes an. Wird beim Spannvorgang der Spannbolzen durch das Spannelement angezogen, wirken ebene Keilflächen aufeinander, so daß nunmehr keine Verformungsarbeit geleistet werden muß. Die Keilflächen bilden stets eine ebene, flächige Anlage zueinander.

In einer bevorzugten Ausführungsform ist vorgesehen, daß der Spannbolzen zwei einander gegenüberliegende, den Keil bildende Schrägflächen aufweist, und daß das Spreizelement mit zwei einander gegenüberliegenden Brückenstegen ausgestattet ist, die beim Spannvorgang bersten. Die Brückenstege werden durch die Gewindeflanken gebildet. Da sie nur an zwei einander gegenüberliegenden Seiten vorgesehen sind, wird die zum Bersten notwendige Reißkraft gegenüber der bisherigen Ausführung halbiert. Da der Durchmesser des Spannbolzens im Normalfall relativ klein ist, ist die Länge jeder Keilfläche begrenzt. Damit jedoch eine asureichende Länge für das Spreizelement erreicht wird, ist in weiterer Ausgestaltung vorgesehen, daß der Spannbolzen mehrere in Längsrichtung hintereinander angeordnete ebene Schrägflächen aufweist, die paarweise und einander gegenüberliegend angeordnet sind. In der Projektion gesehen sind die Schrägflächen dreieckförmig ausgestaltet.

Anhand der beiliegenden Zeichnungen wird die Erfindung noch näher erläutert.

Es zeigen:
- Figur 1: eine zwei rechtwinklig zueinander stehende Möbelteile verbindende Befestigungsvorrichtung,
- Figur 2: den Spannbolzen der Befestigungsvorrichtung nach der Figur 1 als Einzelheit,
- Figur 3: den in das Spreizelement eingesetzten Spannbolzen im unverspannten Zustand in einer Schnittdarstellung,
- Figur 4: eine um 90° gegenüber der Figur 3 versetzte Schnittdarstellung, die Aufweitung des Spreizelementes zeigend.

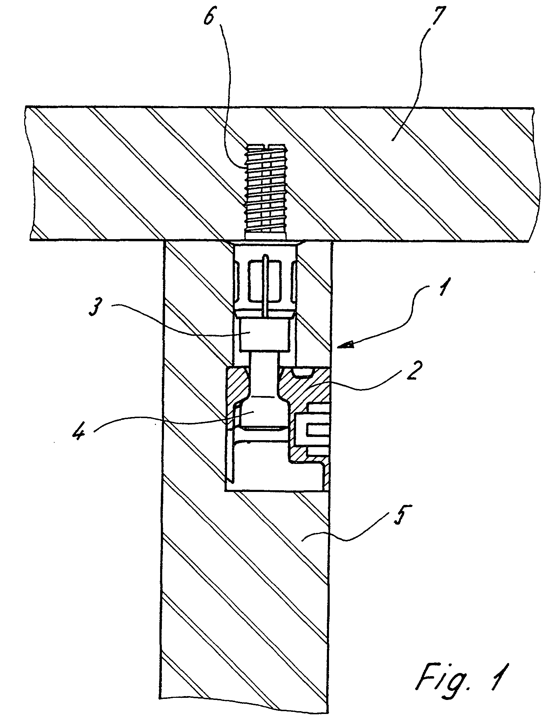

Die in der Figur 1 dargestellte Befestigungsvorrichtung 1 kann auch als Verbindungsbeschlag bezeichnet werden, der mit einem Spannelement 2 ausgerüstet ist, welches im dargestellten Ausführungsbeispiel ein drehbarer Spannexzenter ist. Dieses Spannelement 2 wirkt mit einem Spannbolzen 3 zusammen, der mit einem Kopf 4 ausgerüstet ist, welcher in das Spannelement 2 eingreift. Das Spannelement 2 ist in einer Ausnehmung eines ersten Möbelteiles 5 eingesetzt. Der Spannbolzen liegt mit dem dem Kopf 4 gegenüberliegenden Ende 6 in einer Bohrung des zweiten Möbelteiles 7, welches im dargestellten Ausführungsbeispiel eine Möbelwand ist. Das Ende 6 des Spannbolzens 3 ist von einem aus Kunststoff gefertigten Spreizelement 8 umgeben.

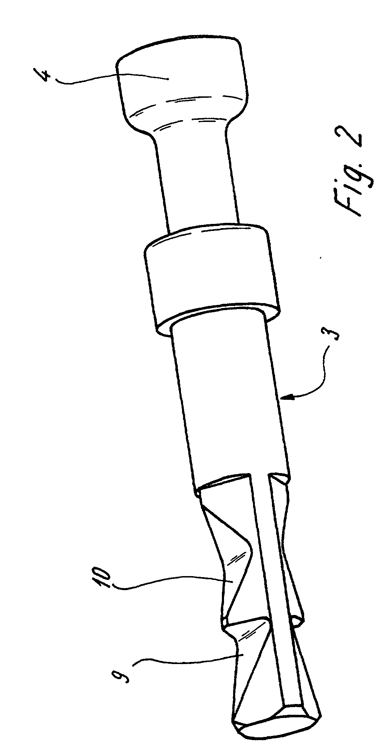

Wie die Figur 2 deutlich zeigt, ist der Spannbolzen 3 mit Schrägflächen 9, 10 versehen, die in Längsrichtung hintereinander liegen und die paarweise angeordnet sind, so daß sich jeweils zwei einen Keil bildende Schrägflächen gegenüberliegen. Diese Schrägflächen 9, 10 wirken mit entsprechenden Gegenflächen des Spreizelementes 8 zusammen.

Die Herstellung des Spreizelementes 8 erfolgt mittels eines Spritzgießwerkzeuges, in welches der Spannbolzen 3 eingelegt wird. Dadurch werden die durch die Schrägflächen 9, 10 entstehenden Vertiefungen mit Kunststoff ausgefüllt. Das Spritzgießwerkzeug ist so gestaltet, daß das Spreizelement 8 außen mit Vorsprüngen 11 versehen ist, die nach Art von Gewindegängen gestaltet sind.

Der Außendurchmesser des Spannbolzens entspricht in etwa dem Kerndurchmesser der Vorsprünge 11 bzw. der Gewindegänge.

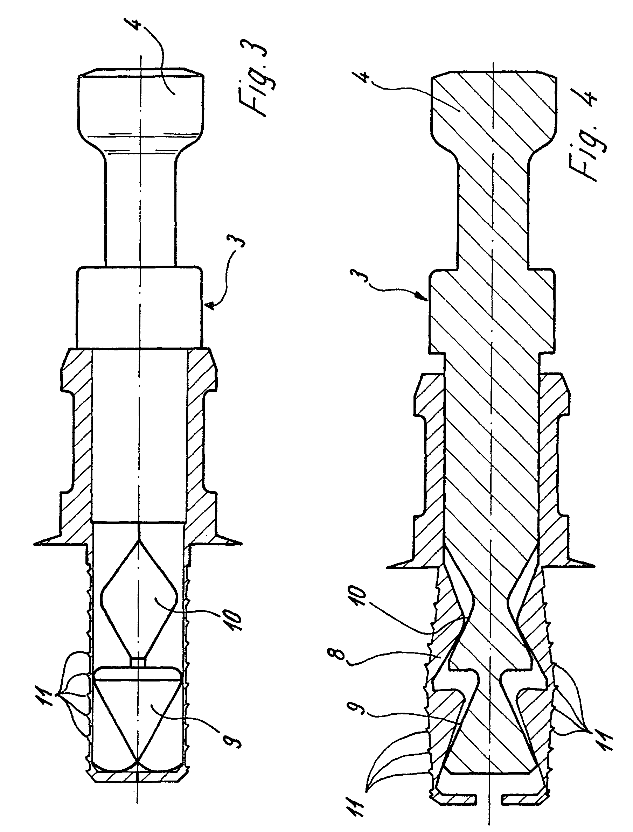

Insbesondere die Figur 3 zeigt, daß das Spreizelement 8 aus zwei Teilen besteht, die durch die Vorsprünge 11 zusammengehalten werden. Die einzelnen Vorsprünge sind daher wie Brückenstege zu sehen. Wird der Spannbolzen 3 gegenüber dem Spreizelement 8 verfahren, bersten die Vorsprünge 11 an den einander gegenüberliegenden Seiten, d. h. in der Mittelachse der durch die Schrägflächen 9, 10 gebildeten Keile. Die verspannte, aufgeweitete Stellung des Spreizelementes 8 zeigt die Figur 4.

Die Figur 2 zeigt besonders deutlich, daß die Schrägflächen 9, 10 ebene Flächen sind. Da sich beim Spritzen die entsprechenden Gegenflächen ergeben, wird beim Spannvorgang erreicht, daß die Schrägflächen 9, 10 und die Gegenflächen vollflächig aneinanderliegen.

## Patentansprüche

1. Befestigungsvorrichtung für zwei miteinander zu verbindende Möbelteile, die im wesentlichen aus einem mittels eines in ein erstes Möbelteil eingesetzten Spannelementes in seiner Längsrichtung verfahrbaren Spannbolzen und einem in das zweite Möbelteil eingreifenden Spreizelement besteht, welches den Spannbolzen umhüllt, wobei der Spannbolzen Spannflächen und das Spreizelement entsprechende Gegenflächen aufweist, **dadurch gekennzeichnet, daß** der Spannbolzen (3) wenigstens eine einen Keil bildende, ebene Schrägfläche (9, 10) aufweist, und daß das Spreizelement (8) eine entsprechende, an den Schrägflächen (9, 10) anliegende Gegenfläche aufweist.

2. Befestigungsvorrichtung nach Anspruch 1, **dadurch gekennzeichnet, daß** der Spannbolzen 3 zwei einander gegenüberliegende, den Keil bildende Schrägflächen (9, 10) aufweist und daß das Spreizelement (8) mit zwei einander gegenüberliegenden, beim Spannvorgang berstenden Brückenstegen ausgestattet ist.

3. Befestigungsvorrichtung nach Anspruch 2, **dadurch gekennzeichnet, daß** der Spannbolzen (3) mehrere, in Längsrichtung hintereinander angeordnete, ebene Schrägflächen (9, 10) aufweist, die paarweise und einander gegenüberliegend angeordnet sind.

4. Befestigungsvorrichtung nach Anspruch 3, **dadurch gekennzeichnet, daß** die Brückenstege durch Vorsprünge (11) vorzugsweise in Form von Gewindegängen gebildet sind.

## Claims

1. Fastening device for two furniture parts which are to be connected to one another, the device essentially comprising a clamping bolt, which can be displaced in its longitudinal direction by means of a clamping element inserted into a first furniture part, and an expanding element, which engages in the second furniture part and encloses the clamping bolt, the clamping bolt having clamping surfaces and the expanding element having corresponding mating surfaces, **characterized in that** the clamping bolt (3) has at least one wedge-forming, planar sloping surface (9, 10), and **in that** the expanding element (8) has a corresponding mating surface butting against the sloping surfaces (9, 10).

2. Fastening device according to Claim 1, **characterized in that** the clamping bolt (3) has two mutually opposite, wedge-forming sloping surfaces (9, 10), and **in that** the expanding element (8) is provided with two mutually opposite bridge crosspieces which rupture during the clamping operation.

3. Fastening device according to Claim 2, **characterized in that** the clamping bolt (3) has a plurality of planar sloping surfaces (9, 10) which are arranged one behind the other in the longitudinal direction and are located opposite one another in pairs.

4. Fastening device according to Claim 3, **characterized in that** the bridge crosspieces are formed by protrusions (11) preferably in the form of thread turns.

## Revendications

1. Dispositif de fixation pour deux parties de meuble à relier entre elles, qui est essentiellement constitué d'une tige de serrage déplaçable dans sa direction longitudinale au moyen d'un élément de serrage inséré dans une première partie du meuble, et d'un élément d'écartement pénétrant dans la deuxième partie du meuble et qui entoure la tige de serrage, la tige de serrage présentant des surfaces de serrage et l'élément d'écartement des contre-surfaces correspondantes, **caractérisé en ce que** la tige de serrage (3) présente au moins une surface oblique (9, 10) plane formant un coin, et **en ce que** l'élément d'écartement (8) présente une contre-surface correspondante s'appliquant contre les surfaces obliques (9, 10).

2. Dispositif de fixation selon la revendication 1, **caractérisé en ce que** la tige de serrage (3) comporte deux surfaces obliques (9, 10) opposées l'une à l'autre, formant le coin, et **en ce que** l'élément d'écartement (8) est équipé de deux pontets opposés l'un à l'autre, qui éclatent pendant l'opération de serrage.

3. Dispositif de fixation selon la revendication 2, **caractérisé en ce que** la tige de serrage (3) comporte plusieurs surfaces obliques (9, 10) planes, disposées les unes derrière les autres dans la direction longitudinale, qui sont disposées deux par deux et opposées l'une à l'autre.

4. Dispositif de fixation selon la revendication 3, **caractérisée en ce que** les pontets sont formés par des saillies (11), de préférence sous la forme de filets.
